# EUROPEAN PATENT APPLICATION

(11) **EP 1 995 737 A1**
(43) Date of publication of application: **26.11.2008**
(21) Application number: 07405154.1
(22) Date of filing: 25.05.2007
(51) Int. Cl.: G12B 21/22

(54) **Probe Module, Probe Array, and a Method of Assembling Probe Arrays**

(71) Applicant: Institut de Microtechnique de l'Université de Neuchâtel, 2007 Neuchâtel (CH)
(72) Inventor: Akiyama Terunobu, 2000 Neuchatel (CH); Clavel Reymond, 1377 Oulens-sous-Echallens (CH); Dafflon Mélanie, 1022 Chavannes-pré-Renens (CH); Staufer Urs, 2000 Neuchatel (CH)
(74) Representative: Frei Patent Attorneys

(57) **Abstract**

The invention refers to a probe array, e.g. for scanning probe microscopes, which is assembled from individual probe modules. Such a probe module comprises a spring means (cantilever) and/or an actuator and handling means and is reversibly attached to a platform carrying the array. In a preferred embodiment the array is assembled out of individual probe modules, which may individually be replaced with identical or different probe modules.

## Description

### FIELD OF THE INVENTION

The invention relates to a probe module, a probe array, and to a method for manufacturing probe arrays. In particular, it refers to a reversibly dismountable probe array.

### BACKGROUND OF THE INVENTION

State of the art scanning probe microscopes, such as e.g. atomic or scanning force microscope (AFM or SFM), scanning tunneling microscope (STM) or in general probes for probing in a nanometer or micrometer range, are known. In order to enhance the throughput of these systems, i.e. the surface area that can be investigated per unit of time, arrays of such probes are formed.

Approaches to enhance the attractiveness of a probe array and to lower implementation thresholds may relate to and are done in various fields. Such fields may refer to e.g.
a) an enhancement of the throughput of measurement arrangements with a probe array or
b) the cost efficiency of manufacturing such systems.

An enhanced throughput of an array is especially interesting in data storage technology. E.g. in Vettiger et al. "The "Millipede" - Nanotechnology Entering Data Storage ". IEEE TRANSACTIONS ON NANOTECHNOLOGY, 1, 39ff (2002), a batch fabricated 2D cantilever array with feedback control of the entire chip is described. Main disadvantages of this system are: if a chip connector is defective, a whole row of cantilevers is not available. If such a chip connector, a cantilever or a tip is broken, the array must be replaced. If there is a variable surface topography tip/surface contact is not given.

A different manufacturing method of arrays for high-density data storage is described by Y.-S. Kim et al. in "WAFER-LEVEL TRANSFER OF THERMO-PIEZOELECTRIC Si3N4 CANTILEVER ARRAY ON A CMOS CIRCUIT FOR HIGH DENSITY PROBE-BASED DATA STORAGE." Proceedings IEEE. MEMS 2006, Istanbul Turkey, 22-26 January 2006, 922 ff (2006). These arrays are compatible with CMOS technique and the thermo-piezoelectric cantilever arrays are fabricated from Si₃N₄, which provide more mechanical stability than the ones made out of silicon on insulator (SOI) wafers. The fabrication of a 34x34 2D array of cantilevers including tips is described, wherein only one step is required to integrate a CMOS wafer and a cantilever array. The fabricated cantilever array is transferred and bonded to the prefabricated CMOS wafer, which is provided with the required electrical contacts and electronic elements. With this array, parallel operation of cantilevers is possible. However, this system suffers from the drawback that in order to have full operation performance of the array, the complete system - cantilever array part and CMOS part - must be replaced, if e.g. one single tip of a cantilever is broken. In addition, a variation in an array arrangement requires also a complete rearrangement of the fabrication of the cantilever array and the CMOS wafer.

Another approach for an improved AFM probe array is done by S.C. Minne et al. "Centimeter scale atomic force microscope imaging and lithography ". Appl. Phys. Lett., 73, 1742ff (1998) and S.C. Minne et al. "Automated parallel high-speed atomic force microscopy". Appl. Phys. Lett., 72, 2340ff (1998). In these documents, a cantilever array is described, wherein the cantilevers are operated in parallel. Each cantilever has a special design with an ZnO actuator, a piezoresistive sensor, integrated single crystal silicon tips and biasing layers and grounding busses, which allow parallel constant force imaging at high speed. These cantilevers are fabricated next to each other to a bonding pad in order to form a 1D array of a desired length. The so formed array of identical cantilevers may possibly still be operated also if one cantilever part fails, if e.g. the same area is interrogated by more than one probe. This however, would limit the throughput and increase the problem of data handling. Altogether, the performance of the array is lessened and for full operation the complete array has to be replaced. In addition, due to the large size of the individual cantilevers, it is not possible to manufacture a 2D array with an as narrow tip to tip distance as in the 1D array.

A favoured AFM probe, comprises a cantilever with a probing tip and a comb actuator, where an electrostatic potential is set to the comb shaped electrodes of the actuator. Such probes provide potential for high-speed feedback motion in atomic force microscopy as e.g. described in T. Akiyama et al. "Atomic force microscopy using an integrated comb-shape electrostatic actuator for high-speed feedback motion. " Applied Physics Letters, 76, 3139-3141 (2000). Although through the integration of the actuator into the cantilever the throughput of the AFM may be increased, these actuators require a lot of space. Therefore, arrays with integrated comb actuators are in general limited to 1D arrays or in the case of Y. Ahn et al. "Si multiprobes integrated with lateral actuators for independent scanning probe applications. " J. Micromech. Microeng., 15, 1224ff (2005) to very small 2D arrays. With the special arrangement of the 1x4 array of Ahn et al. it is e.g. possible to have a very narrow tip to tip distance and to probe e.g. an individual biological cell. However, larger 2D arrays, e.g. > 2x2, are not feasible.

A document which approaches the spacing issue in 2D cantilever arrays is Eugene M. Chow et al. "Characterization of a two-dimensional cantilever array with through-wafer electrical interconnects", Appl. Phys. Lett. 80, 664 (2002). For saving space and to allow for a scanning of samples which are larger than the array, the electrical wiring and the wire bonds are moved to the back side of a wafer, i.e. to the opposite side than the cantilevers and tips. This is achieved by through-holes in the wafer. With this kind of wiring two rows of cantilevers may be distance by 1.5mm. However, This way of wiring is not only advantageous for the question of spacing but also in view of protecting contacts. These are isolated from e.g. a liquid or acidic environment of the tip and therefore need no special treatment.

### SUMMARY OF THE INVENTION

It is an object of the invention to provide a probe array, preferably a SPM array that overcomes disadvantages of prior art SPM arrays and by which the flexibility of an SPM array is improved. It is also an object of the invention to provide an SPM module for the mentioned SPM arrays and a method for assembling an at least partly reversibly dismountable probe array.

These objects are achieved by the invention as defined in the claims.

The basic idea of the invention is to assemble a probe array, e.g. for a scanning probe type microscope, out of individual modules. Such a probe module comprises in a basic version a spring means and/or an actuator and handling means for reversibly assembling said spring means and/or actuator, preferably with other probe modules, to form a probe array. This array may be a 1D or 2D array, which defines the final array but may also be a sub-array that may reversibly be assembled preferably with further probe modules or sub-arrays, to form a larger array.

In general, the spring means is a force transducer, which converts a force acting on the spring means into an elastic deformation of the spring means, which deformation may be detected in a direct or indirect way. The spring means is intended and designed for being combined with a probing tip, where the probing tip may be integrally formed with the spring means or be attached thereto. The spring means may be a conventional cantilever where a tip is integrated or is or may be attached to. However, it may be designed in various manners fulfilling its 'spring'-feature. E.g. a spring means may e.g. also be designed as a conventional spring or as a series of individual cantilevers, where only the final one, that is to be brought into contact with a sample to be probed, is or will be equipped with a probing tip. With such cantilever spring means, e.g. springs or a series of cantilevers, e.g. arranged in a zig-zag mode, it is possible to achieve almost every desired spring constant on an as small as possible space. In addition, a zig-zag cantilever may be fabricated in an inplane fabrication process.

An actuator is a means to move an object, e.g. a device or a component, such as a spring means (cantilever) or a tip respectively, in at least one dimension according to an input signal, e.g. electrical, optical, thermal etc.. An actuator e.g. in an SPM probe module may e.g. be used for changing a tip-sample distance (Z-feedback); in an AFM probe module also for vibrating a cantilever, e.g. for an operation of the cantilever in a dynamic mode. E.g. in SPM applications an actuator is generally used for the positioning of a tip in an X, Y or XY direction relative to a sample to be scanned. Preferably an actuator is based on an electrostatic principle, such as a comb-like actuator where an electrostatic potential is set to the electrodes of a comb-shaped actuator. However, also actuators base on a piezoelectric, bimorph or thermal principle.

With individual, reversibly attachable and detachable probe modules, it is possible to replace or exchange damaged probes without having to replace a whole array, which may be very cost intense. It is also possible to assemble and also modify an already existing array according to one's needs. In addition, an array does not have to consist of identical probes but may contain different probe modules that are adapted e.g. to strongly varying surface structures within the range of one array. If a probe module has its own individual actuator, it is possible to individually control the height of each probe of an array. This is also an important aspect if the surface topography is not equal for the entire array and some probes touch a surface while others do not and a large deflection range of individual probes is required.

The probe modules may be fabricated separately or in a batch, e.g. by microfabrication. They may also be fabricated according to different methods or out of different materials, e.g. SOI wafer etching or by using conventional doped silicon wafers. Such different probe modules may be combined in an array.

Individual probe modules allow for a very flexible and cost effective construction of a probe array in many ways. The form of an array and the arrangement of the probes in an array may easily be changed or adapted e.g. by changing the form of a platform where the array is formed in, by changing the construction of an individual probe module etc.. The possibility of replacing individual probe modules is not only cost efficient it also allows for various fields of applications of the inventive probe arrays. Some fields are: probing biological cells, where a very narrow spacing of probes or probing tips are required, probing of samples with non-negligible topography, where an individual deflection of probes within several ten micrometer range is required, electronic probing of advanced level CMOS circuitry by a combination of current and voltage probes, investigation of material hardness using different tips, e.g. diamond an standard tips, etc.. It is e.g. also possible to fabricate a large part of an array with cheaper manufacturing methods and provide only a part of the array with probe modules that provide features according to a higher and possibly more costly standard. In this way it is also possible to assemble a part of an array with probe modules fabricated according to a possibly cheaper fabrication method and provide more sophisticated probe modules only at locations in the array where needed.

For a reversible assembling, the probe modules have handling means which allow for a handling of the module, e.g. by a micro robot, in order to mount or dismount the module to or from an array or to from a platform that is to carry the individual modules.

In a preferred embodiment the probe module comprises a spring means and at least one actuator, which are both attached to the handling means. It may also contain electrical contacts for electrically connecting the probe module to a platform.

For the reversible attachment the module and/or a platform, where the module is to be attached to, have attaching means for reversibly attaching the probe module to said platform. If the module is reversibly assembled to form a sub-array then it may also be the sub-array having the attaching means. The attaching means for reversibly attaching probe modules or sub-arrays to a platform may be any suitable attaching means that allow for an assembling and a dismounting. Such attaching means may e.g. be spring clips, clamp means, e.g. by clamps or by electrostatic camping, magnetic elements or turn-look fasteners, but also non-permanent glue, wax, polymer or any other thermoviscous material that may e.g. be loosened by heat. Also further material interfaces are possible that allow as such a reversible attachment or that are or get hard but may be plasticised so that a detachment e.g. upon interaction with heat, water, chemical solution, irradiation with UV light, etc.. is possible.

Attaching means preferably allow for a certain adjustable or presettable pressure force, e.g. spring force. Such attaching means are easily feasible e.g. as mechanical clamps and may e.g. be integrated in the handling means of a probe module.

In a preferred probe array according to the invention, a platform comprises a plurality of probes, wherein at least an individual probe or a sub-array of probes is reversibly attached to the platform. In an even more preferred embodiment of the array all the probes are probe modules and reversibly attacheable to a platform. If the array is assembled of individual sub-arrays then the individual sub-arrays are reversibly attacheable to the platform and the at least one probe module of the sub-array is reversibly detachable from other parts of the sub-array.

In another preferred embodiment of the probe array, the array comprises a platform having a plurality of spring means and/or actuators, wherein at least one spring means and/or actuator is a part of a probe module as described herein before. Such an array may therefore be an array of spring means with or without actuators (i.e. passive or active probes), a semi-finished array such as an array with spring means not yet provided with probing tips, but may also be an array of actuators, where no further probing means will be installed, e.g. for the use as 'chemical noses', where a chemical molecule is taken up by the actuator and directly changes a feedback of the actuator.

In a probe array of the present invention, it is possible to have different probe modules next to each other or to replace a probe module by a different one. Examples of different probe modules are: passive and active probes, such as probes used as sensors, e.g. with piezoresistive elements; probes used for e.g. manipulating a surface, e.g. probes with actuators; combined probes (sensor and actuator); probes with different deflection ranges for varying topography; conductive / non-conductive probes; hard probes (e.g. diamond probes); probes of different radius of curvature and aspect ratio of the probing tip; probes with different physical functionality, e.g. where the tip forms a thermocouple or a magnetic field sensor (e.g. Hall sensor) or has an electrical probing tip; probes with tips with different surface chemistry, e.g. for chemical reaction measurements; probes with integrated or external sensors, e.g. deflection measurements (interferometric (optical), capacitive, piezoresistive, etc.); probes with tips dispensing different liquids; tweezers; etc. Accordingly individual probe modules of an array may also contain or be fabricated of different materials, e.g. SOI or conventional wavers, with different fabrication processes like anisotropic wet-chemical silicon etching or deep reactive ion etching, or molding of materials like Si3N4, diamond, metal films or polymers. In an array with individual probe modules, many modules can work in parallel, e.g. for probing a large area or for scanning a sample surface. All of the above mentioned and further different probes may be combined in an array according to a required operation or function.

A method for assembling a probe array according to the invention, where the probe array comprises individual, exchangeable probe modules, comprises the step of taking a probe module and attaching said probe module to a platform. These steps are repeated until a desired array is completed. This array may e.g. be a 1D or a 2D probe array. In an embodiment of the method several probe modules are aligned into a sub-array before being attached to the platform, wherein the sub-array itself is preferrably also reversibly dismountable into its individual probe modules or also other parts of the sub-array. In a preferred embodiment of the method a probe module or a sub-array of probe modules is replaced by another probe module or sub-array, respectively. This other probe module or sub-array is either a replacement of a first, possibly defect probe or is different to the one which is replaced.

For a reliable precision assembly of modules into a platform, mechanical reference structures may be present in the probe module and/or the platform or other parts of an array that are mounted.

In another preferred embodiment of the method the or several probe module/s is/are microfabricated, e.g. out of a wafer, preferably in one plane, then each turned out of this plane for being attached to the platform. With this method it is possible to microfabricate a complete probe module with handling means, actuator, spring means and probing tip and assemble it to an array, where the handling means and the actuator means, that usually afford large amount of space, may be arranged in a third dimension and narrow tip to tip ranges of as less as one micrometer are achievable. It is also possible to in-plane fabricate only parts of the modules, e.g. cantilever spring means without tips and mount the tips at a later stage of the assembling process. This can e.g. be done using the method described in T. Akyiama et al. "Wafer- and Piece-Wise Si Tip transfer Technologies for Applications in Scanning Probe Microscopy. " IEEE Journal of Microelectromechanical Systems, 8, 65ff (1999).

In individual probing modules, sub-arrays and/or platforms also further components, such as e.g. electronics, fluidic circuits, optics, attaching means etc. may be integrated, reversibly attached or permanently fixed, e.g. fabricated in one-piece. Fluidics may e.g. be a channel or in the case of an array also a network of channels for locally distributing or collecting liquids, suspensions or gases etc. Also sensor(s) to detect the movement of a spring means can be integrated in the module. The actuator "components" can be also used for sensing of the cantilever movement. The probe module may be assembled with other components in operation, e.g. electronics, optics or fluidics, in order to provide a flexible relative arrangement. Fixing the module to other components is preferably done in a way that dismounting of the module from these other components is feasible. However, it may also be advantageous to permanently fix the probe module with other components, e.g. an actuator or electronics, especially if this allows for an integrated manufacturing of these 'extended' probe modules.

### BRIEF DESCRIPTION OF THE DRAWINGS

- Fig. 1a-1c depicts a diagram of a method for assembling a probe array;
- Fig. 2 schematically shows a circularly arranged probe array;
- Fig. 3 shows an embodiment of an AFM probe module;
- Fig. 4 depicts a scheme of an assembly procedure of a probe array;
- Fig. 5 shows a 2D array of individual probe modules according to Fig. 3;
- Fig. 6 shows an embodiment of a probe module;
- Fig. 7 depicts a part of an embodiment of a 1D probe array with the probe module of Fig. 6.
- Fig. 8 shows an in-plan fabricated tip

### DESCRIPTION OF THE PREFERRED EMBODIMENTS

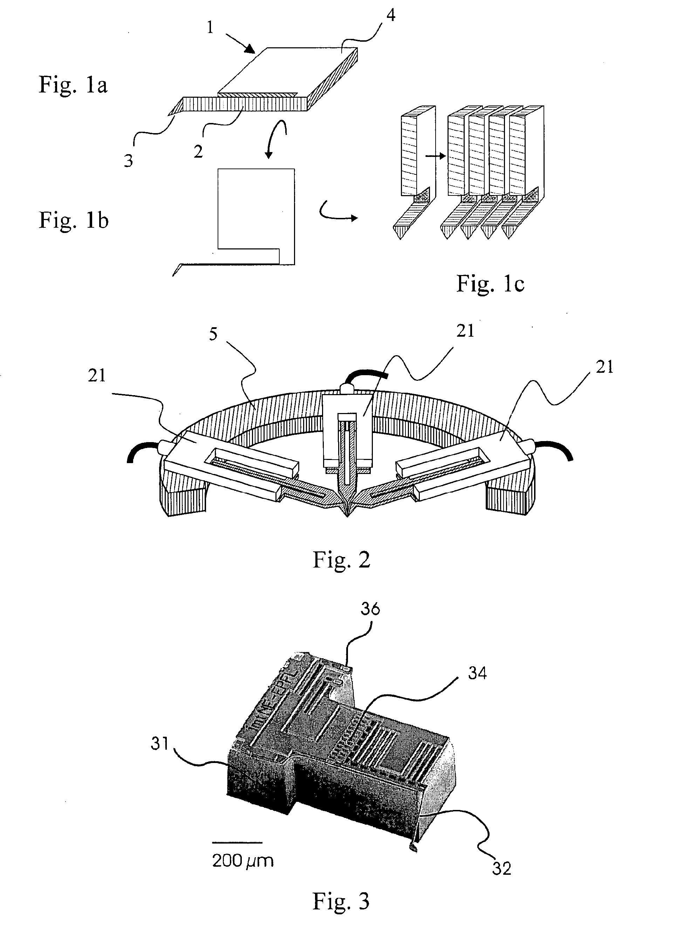

In **Fig. 1a****-c** method steps of an assembling method of a schematically drawn probe array is shown. The probe module 1 comprises a cantilever 2 with a tip 3 and a handling means 4, which preferably comprises an actuator. The complete probe module may be fabricated, e.g. via processing of a silicon on insulator (SOI) wafer, in one plane with bulk-microfabrication. The ready to use probe module is then turned out of the fabrication plane, e.g. by 90° (Figure 1b) and then -shown by arrows- assembled (Fig. lc) in a row or attached to a platform (not shown) to form a 1D array. Several such rows can be assembled to form a 2D probe array.

This method allows on one hand an in-plane fabrication process of one or a plurality of modules (separate manufacture or batch fabrication). On the other hand the way of assembling the individual modules leave a tip to tip distance in the assembled array that is not or not much larger than in known cantilever arrays without individual actuators. A typical tip to tip distance that can easily be achieved in a practically unlimited 1D array is in the range of 200µm-2mm, e.g. 500µ-1mm. Large handling means or e.g. large actuators such as comb actuators, are mounted in the 'third' dimension and as such have no or not much influence on the tip arrangement. This allows e.g. also for larger 2D arrays, e.g. >2x2 or 2x4. The advantages of the method specially come into effect with large arrays such as e.g. 32x32, 64x 64, 1028x1028 or even larger.

Each individual probe comprises handling and possibly also attaching means (not shown), which allow for the module to be reversibly attached or for being reversibly attached to a platform carrying the array.

An attachment is preferably combined with an exact positioning of a probe module. Such a positioning aims at blocking at least one of the six degrees of freedom of the module. As known to the expert in the field, this can be achieved by exerting a force on the module, e.g. by means of a mechanical spring, which pushes the module against a reference structure, e.g. hemispheres, cylinders, v-grooves or combinations thereof. In such an embodiment attachment means and reference structures are combined. However attachment means and an exact positioning may be separate features. With blocking all six degrees of freedom of the probe module an exact and fixed positioning is possible.

Every thinkable arrangement of probe modules is possible since the arrangements or arrays are assembled from individual probe modules. These arrangements may be assembled from identical or different probe modules. Typical arrangements have e.g. regular, rectangular or quadratic matrix form or a circular configuration as shown in **Figure 2****.** Such a circular arrangement of probe modules 21 allows for a very narrow spacing of several probing tips, e.g. for probing single biological cells. The individual probe modules 21, here shown as SFM probe modules with tip carrying cantilevers on tuning fork-like actuators, are reversibly attached to a ring-like platform 5. This allows exchanging damaged modules or - if a probing setup requires - modules can be exchanged by probe modules with a different physical or chemical functionality.

In the present embodiment the tips are integrally formed with the cantilevers and are positioned at an outermost end of them. The tips are not at an angle of 90° to the cantilevers or the sample, respectively, but point into a slightly forward direction. With such an arrangement of the tips these may be positioned to each other as close as e.g. 1 µm with a corresponding exact precision-approach mechanism.

In **Figure 3** a picture of a first embodiment of an SFM probe module 31 is shown. The module includes a comb-shaped electrostatic actuator 34 and a parallel spring flexure mount of a cantilever 32. Also shown are spring loaded electrical contacts 36 for electrically connecting the module to a platform. This embodiment is designed to be clamped by e.g. mechanical clamps, leaf springs, 'snap-in' type retaining features in the platform, which may also be integrated in the probe module or in an additional clip device, which interfaces the module to the platform.

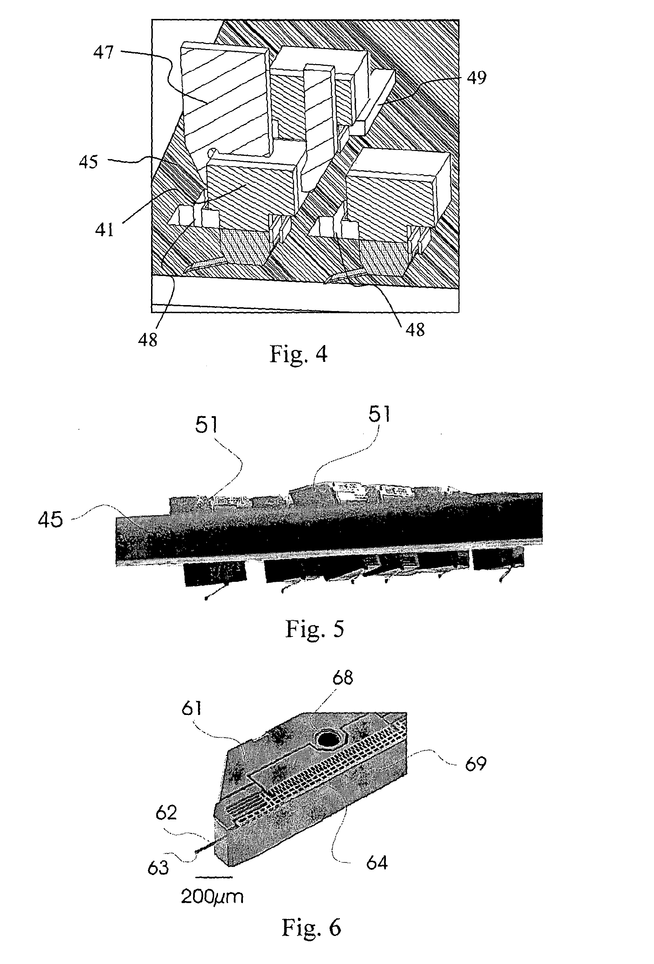

The module may be clipped into a platform, e.g. by means of a micro-robot, as schematically shown in **Figure 4**. The platform 45 has several holes 48 provided for the reception of probe modules 41. In the holes attaching means (not shown) may be present for clamping the probe, preferably with a well defined pressure force. The probe modules may be inserted from above or - depending on the design of the modules and the construction of the attaching means- also from below the platform. An approach from below may be advantageous in order not to risk the damaging of a tip due to a misalignment of the robot 47. On the platform electrical elements 49, e.g. simple electrical lines or an electrical bus system, are visible, which may also be reversibly attached to the platform. Platform and/or probe module preferably have alignment means, e.g. mechanical reference structures, guiding elements for a secure and well defined placement of the modules in the platform. Preferably a set of reference structures, e.g. on the platform and on the module, is present to fully define one position. It is possible to have several, e.g. two different, sets of reference structures, e.g. for an initial positioning of the module on different heights. The flexible electrical contacts 36 might e.g. be also a reference structure. However, since electrical contacts are preferably very flexible, it is preferred to have fixed mechanical reference structures independent of the electrical contacts. These reference structures block at least one, preferably all six, of the six degrees of freedom of the module.

**Figure 5** shows a picture of a small array (2x4) of assembled individual probe modules 51. On the underside of the platform 45 cantilevers and lower parts of the handling means are visible. The tip to tip distance in this example array is about 1mm. A pitch range from 1 mm down to 50 µm is of particular interest in arrays with a rectangular, periodic arrangement.

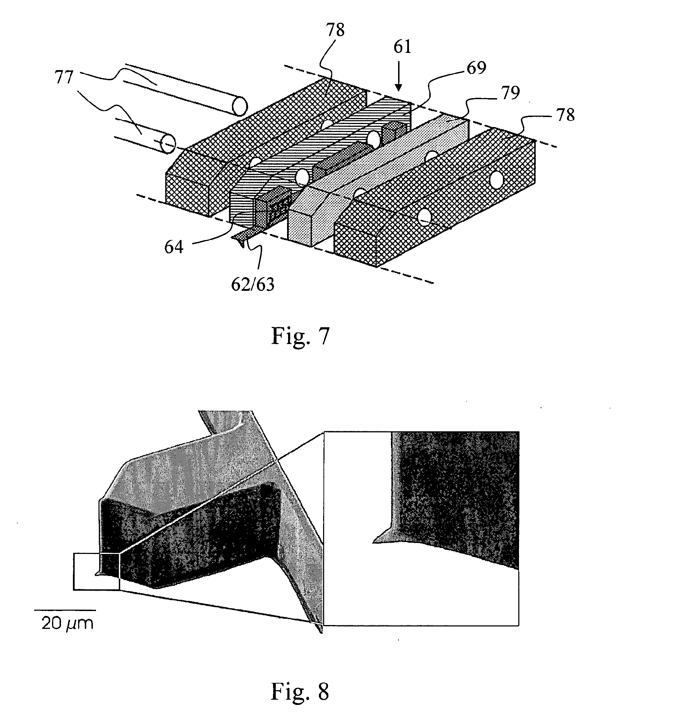

**Figure 6** shows another embodiment of a probe module, which is preferably used for the fabrication of a linear (sub-) array. The individual module 61, comprising tip 63, cantilever 62 and comb actuator 64 also has through holes 68 in the handling body 69. Through these holes the module can be 'threaded together' with further probe modules or probe elements, e.g. electronic means 79, as shown schematically in **Figure 7****.** The array is terminated with a first and a last handling body 78. For the alignment of the array, which in this embodiment consists of a module 61, the electronic means 79 and first and last separate handling bodies 78, optical fibers 77 or other high precision e.g. rod like pins made of sapphire serve as guiding elements. Since no bonding exists or is necessary between the individual elements of the array, it may be taken apart and the probe module may be replaced by another module or element. Also additional modules, actuators, dispensers for modules or actuators may be incorporated in the array. For an attachment of the array on a platform the first and last separate handling bodies 78 may be provided with attaching means.

**Figure 8** shows a picture of a tip and an enlarged part of the tip section. The tip is integrally formed with the cantilever and was fabricated in-plane out of a SOI wafer by deep reactive ion etching, oxidation and KOH etching. Probe modules fabricated in this way are favorably used in the assembling method of the present invention. As mentioned earlier, with the in-plane fabrication also different embodiments of a spring means, which in conventional applications is a conventional cantilever, are feasible. Especially, zig-zag shaped springs, also with an integrally formed probing tip may be fabricated in this way. Such a zig-zag cantilever has the advantages of a spring with its range of possible spring constants but saving space.

## Claims

1. A **probe module** comprising a spring means and/or an actuator and handling means for reversibly assembling said spring means and/or actuator, to a probe array.

2. A probe module according to claim 1, wherein the handling means include attaching means for reversibly attaching the probe module to a platform.

3. A probe module according to claim 1 or 2, wherein attaching means are spring clips, clamp means, magnetic elements or turn-lock fasteners, electrostatic clamps or a plasticiseable interface material.

4. A probe module according to any of claims 1 to 3, comprising an actuator, a spring means with a probing tip and electrical contacts for electrically connecting the probe module to the platform.

5. A **probe array** with a platform comprising a plurality of probes, wherein at least an individual probe or a sub-array of probes is reversibly attached to the platform.

6. A probe array according to claim 5, wherein the individual probe, the sub-array of probes or the platform comprise attaching means for the reversible attaching of the probe or the sub-array and the platform to each other.

7. A **probe array** with a platform comprising a plurality of spring means and/or actuators, wherein at least one spring means and/or actuator is a part of a probe module according to any one of claims 1 to 4.

8. A probe array according to claim 7, wherein at least two spring means and/or actuators are parts of probe modules and one probe module is different to the other probe module.

9. A probe array according to claim 8, wherein the difference of the probe modules is defined by one of the group of:
- different material;
- where applicable different actuator;
- different sensor;
- different physical functionality;
- different surface chemistry of a probing tip;

10. A probe array according to any one of claims 7 to 9, wherein all of the spring means and/or actuators are each a part of a probe module.

11. A probe array according to any one of claims 7 to 10, wherein the platform comprises attaching means for reversibly attaching the probe modules to the platform.

12. A probe array according to any one of claims 7-11, wherein several or all probe modules comprise at least one electrostatic comb-actuator.

13. A probe array according to any one of claims 7-12, wherein the platform and/or the probe module comprise mechanical reference structures for a positioning of a probe module on the platform blocking at least one degree of freedom of the probe module, preferably blocking all six degrees of freedom.

14. A method for assembling a probe array consisting of individual, exchangeable probe modules, comprising the steps of:
a) taking a probe module, which comprises at least a cantilever and/or an actuator and handling means;
b) attaching the probe module to a platform;
c) repeating steps a) and b) until completion of a 1D or 2D probe array with a desired size.

15. A method according to claim 14, wherein several probe modules are aligned into a sub-array before being attached to the platform.

16. A method according to claim 14 or 15, wherein a probe module or a sub-array is replaced by another probe module or sub-array, respectively.

17. A method according to any one of claims 14 to 16, comprising a first step of microfabricating the probe module.

18. A method according to claim 17, wherein the probe module is microfabricated in one plane, then turned out of this plane for being attached to the platform.

19. A method according to any one of claims 14 to 18, wherein different probe modules are attached to the platform to form a probe array.

20. A method according to any one of claims 14 to 19, wherein electronic chips are attached to the platform.
